# EUROPEAN PATENT SPECIFICATION

(11) **EP 2 368 770 B1**
(45) Date of publication and mention of the grant of the patent: **24.10.2012**
(21) Application number: 10003022.0
(22) Date of filing: 23.03.2010
(51) Int. Cl.: B60R 19/34, F16F 7/12

(54) **Method for producing a crash box and crash box**
Verfahren zur Herstellung einer Crashbox und Crashbox
Procédé de production de crashbox et crashbox

(43) Date of publication of application: 28.09.2011
(73) Proprietor: Benteler Automobiltechnik GmbH, 33102 Paderborn (DE)
(72) Inventor: Paulsen, Frode, 2819 Gjøvik (NO)
(74) Representative: Ksoll, Peter

(56) References cited:
- EP-A1- 1 234 729
- DE-B3-102005 021 663
- JP-A- 2009 107 408

## Description

The present invention relates to a method for producing a crash box according to Patent Claim 1.

The present invention also relates to a crash box according to the precharacterizing clause of Patent Claim 7 and to a vehicle subassembly according to the precharacterizing clause of Patent Claim 15.

Bumpers are arranged transversely at the front and rear of a motor vehicle, between the plastic panelling closing off the body and the frame of the motor vehicle. To avoid damage to the vehicle structure in front or rear collisions at low speeds, deformation elements, known as crash boxes, are integrated. Crash boxes are thin-walled, generally profile-shaped elements of steel, aluminium, composite material or plastic. They may be produced by joining together compressed sheet-metal shells or as one part, for example as an extruded aluminium profile.

Arranged between the longitudinal members of the vehicle and the transverse members, the crash boxes absorb the kinetic energy resulting from a collision, in that they convert this energy into deformation work. This is intended to avoid permanent damage to the longitudinal member if a critical load level is exceeded.

In vehicle collisions at higher speeds, the crash boxes absorb kinetic energy to such a degree that the loading to which the passenger compartment or the occupants of the motor vehicle are subjected as a result of the collision is brought to a subcritical level.

It is particularly advantageous for crash boxes to be of a frusto-pyramidal shape. This causes deliberate crumpling during the deformation work. In the case of an accident, the crash box collapses like an accordion and in this way reduces the kinetic energy of the collision.

Against the background of increased requirements with respect to low fuel consumption and low CO₂ emissions of motor vehicles, the vehicle manufacturers are striving to keep down the overall weight of the motor vehicle. Metallic materials prove to be a particularly low-cost material for producing crash boxes, with at the same time low weight and a good energy absorption capacity.

However, complex production processes are required here to produce a frusto-pyramidal shape of the crash boxes and stand in the way of low-cost manufacture of the motor vehicle.

For example from DE 10 2005 021 663 B3 a crash box is known which has a first wall, a second wall, a third wall, a fourth wall, a rear side and a front side, with the first wall, the second wall, the third wall and the fourth wall having at least one trapecoidal length segment. These known crash boxes are produced from blank metal sheets which are formed and in particular double layered or welded together.

It is therefore an object of the present invention to provide a method for the low-cost production of a crash box, with the crash box having a particularly high energy absorption capacity.

It is also an object of the present invention to provide a crash box which has a high energy absorption capacity while at the same time it has a low weight and can be produced inexpensively.

The aforementioned object is achieved according to the invention by a method for producing a crash box from a profile component according to Patent Claim 1.

The part of the object relating to the tangible item is achieved by a crash box produced from a hollow profile, according to Patent Claim 7.

The part relating to the tangible item is also achieved by a vehicle subassembly according to Patent Claim 15.

Advantageous developments of the present invention constitute part of the dependent patent claims.

The method according to the invention for producing a crash box, from a profile component, with the profile component having a first wall, a second wall, a third wall, a fourth wall, a front side and a rear side, is carried out by the following method steps:
- fixing the profile component in a forming device, which has a 1st tool and a 2nd tool, the 1st tool and the 2nd tool having at least one trapezoidal length segment in the longitudinal direction of the tool, the 1 st tool coming to lie substantially flat against the outside of the first wall and the 2nd tool coming to lie substantially flat against the outside of the second wall, so that regions of the first wall protrude laterally with respect to the 1st tool and regions of the second wall protrude laterally with respect to the 2nd tool,
- introducing supporting elements into an interior space of the profile component, the supporting elements being designed such that they correspond to the trapezoidal shape of the 1st tool, the supporting elements substantially filling the interior space and coming to lie substantially from the inside against the first wall and from the inside against the second wall,
- forming of the laterally protruding regions by profile tools, the profile tools being moved in relation to the 1st tool, the 2nd tool and the supporting elements, the third wall and the fourth wall being formed in the direction of the supporting elements to create double-layered projections projecting with respect to the second wall.

It is particularly advantageous in the case of the method according to the invention that a crash box which has a substantially trapezoidal outer contour in two axial directions can be created from a hollow metal profile, produced in particular by a standard production process.

The trapezoidal outer contour provides a particularly advantageous possibility of reducing kinetic energy in the case of a crash. The profile component also has particularly great stiffness in the longitudinal direction. If, however, a limit for kinetic energy caused by a collision is exceeded, a process of compression with deliberate crumpling begins. This gives rise to particularly advantageous deformation of the profile component for the absorption of kinetic energy as deformation energy.

In a further preferred embodiment, the double-layered projections are formed from the regions of the second wall and the segments of the third wall and the fourth wall adjacent thereto. This gives rise to the advantage that double-layered projections created by deformation are produced in the case of the method according to the invention for producing a profile component.

The double-layered projections are in this case arranged in such a way that, by forming of the third and fourth walls, said walls are moved in the direction of the second wall and at the same time the third and fourth walls are moved towards one another in the direction of the supporting elements. As a result of this, a region that does not lie in contact with the second tool is obtained on the second wall.

After that, the regions of the second wall and of the third and fourth walls combine to form a double-layered projection. The double-layered projections thereby come to lie respectively against lateral walls of the second tool. As a result, the crash box is given a trapezoidal contour, when viewed from the direction of the third or fourth wall, decreasing from the front side to the rear side.

In a further preferred embodiment, a double-chamber hollow profile is used as the profile component and a supporting element is introduced into each chamber. The use of a double-chamber hollow profile as the profile component gives rise in particular to the advantage that a central web is present.

In the case of the method according to the invention, the central web of a double-chamber hollow profile between the first wall and the second wall is not included in the forming operation, so that on each side of the central web a supporting element is introduced such that it comes to lie between the first wall and the second wall. The double-chamber hollow profile with the central web provides the crash box with increased stiffness and an increased absorption capacity in the case of a crash.

The double-layered projections are preferably of a triangular design, running from the rear side to the front side orthogonally in relation to the second wall. As seen from the third and/or fourth wall, this substantially produces a trapezoidal shape of the crash box. A triangular shape should be understood within the scope of the invention as meaning a shape which becomes wider to one side, narrower to another side. It may, for example, also comprise a trapezoidal shape. The triangular shape does not mean that the double-layered projection is created such that it tapers to a point on one side.

In a further preferred embodiment of the method according to the invention, after the forming operation, the front side and/or the rear side is subjected to a separating process. A separating process should be understood within the scope of the invention as meaning that part of the front side and/or rear side is detached by a step in the method.

This detachment may take place, for example, in the form of sawing, by a thermal separating process or else, for example, by water-jet cutting. The front side and/or rear side of the crash box newly produced by the separating process can then be further processed particularly well in a subsequent production process.

Connection to a joining flange, for example by means of a thermal joining process, is conceivable here, for example. This makes it possible to obtain a smooth connection of the newly produced front side and/or rear side in the connecting region.

In a particularly preferred variant for implementing the method according to the invention, the third wall and the fourth wall are formed such that they run towards one another at an angle from the rear side to the front side. This should be understood as meaning that, in the case of the forming process according to the invention, the third wall and the fourth wall are formed by the profile tools such that they move towards the supporting elements.

This means that, as seen from the first wall and/or the second wall, the crash box substantially assumes a trapezoidal shape. The third and fourth walls thereby form the legs of the trapezoidal shape. These legs run at an angle in relation to one another. The geometrical shape is designed in such a way that they are formed such that they run towards one another from the rear side to the front side.

The part of the object relating to the tangible item is achieved by a crash box.. This crash box. produced from a hollow profile and having a first wall, a second wall, a third wall, a fourth wall, a rear side and a front side, with the first wall, the second wall, the third wall and the fourth wall having at least one trapezoidal length segment, is characterized in that a double-layered projection is respectively created in a transitional region from the second wall to the third wall and in a transitional region from the second wall to the fourth wall, the double-layered projection running in a substantially triangular shape from the rear side to the front side.

The crash box according to the invention offers the advantage in particular that it is produced at low cost from a hollow profile and the trapezoidal length sections of the first wall and the second wall as well as of the third wall and fourth wall provide the crash box with particularly great stiffness. The trapezoidal length segment of the third wall and the fourth wall is respectively formed here by a double-layered projection, the double-layered projection being formed in a transitional region from the second wall to the third wall and from the second wall to the fourth wall.

The double-layered projection, running from the rear side to the front side, in this case provides the crash box with the substantially trapezoidal form of the third and fourth walls. This produces a crash box which, while of low weight and easy to produce, has particularly great stiffness and a particularly high crash energy absorption capacity.

The crash box is in this case also characterized in that the hollow profile is a lightweight extruded metal profile. This provides the advantage that the crash box can be produced at low cost and with particularly low weight, while at the same time satisfying high requirements for the crash energy absorption capacity.

It is particularly preferred that the crash box is characterized in that, in the longitudinal direction of the component, a central web is formed on the first wall and the second wall, connecting them to one another. The central web provides the crash box with further stiffness. Furthermore, the central web particularly increases the crash energy absorption capacity of the crash box.

Preferably, the trapezoidal length segment of the first wall and the second wall is designed such that it becomes narrower from the rear side to the front side and the trapezoidal length segment of the third wall and the fourth wall is designed such that it becomes wider from the rear side to the front side. This provides the advantage in particular that the crash box can be produced with particularly low weight, since an existing standardized hollow profile provided at low cost is formed into a substantially trapezoidal crash box.

In a further preferred embodiment, the trapezoidally designed length segment is adjoined by a rectangular length segment. The substantially rectangularly configured length segment offers the advantage that the crash box can be integrated in the vehicle particularly easily in a further processing process. For example, the length segment can be connected to a longitudinal member, so that the crash box, acting as a crash box, can receive a transverse member on the other side. The rectangular length segment also serves for increasing the crash energy absorption capacity of the crash box.

In a further preferred embodiment, the double-layered projections are formed over the entire length of the crash box in the direction of the component. This should be understood within the scope of the invention as meaning that the double-layered projections are not only created in the trapezoidally designed length segments but are also in the rectangular length segments. The double-layered projections are in this case, however, of a substantially rectangular design themselves in the rectangularly designed length segments. This means within the scope of the invention that, running from the front side to the rear side, they are not designed such that they run in a trapezoidal or triangular shape.

In a further preferred embodiment, the double-layered projections have a cross-sectional configuration differing from one to the other. A differing cross-sectional configuration should be understood within the scope of the invention as meaning that, for example, the double-layered projection on the side of the third wall is created differently than the double-layered projection on the side of the fourth wall.

This provides the advantage that the double-layered projections of the crash box can be adapted to comply with the requirements for the field of use. For example, it is conceivable within the scope of the invention that the double-layered projection of the third side is made larger in its cross-sectional area and also in its cross-sectional length in comparison with the double-layered projection of the fourth side, or vice versa.

In a further preferred embodiment of the present invention, the walls have clearances and/or flanges. This should be understood within the scope of the invention as meaning that the first wall, the second wall, the third wall, the fourth wall and/or the double-layered projections have clearances and/or flanges. These clearances may, for example, be used with regard to weight-optimizing aspects.

The flanges may be designed for coupling further add-on parts to the crash box. It is conceivable here, for example, within the scope of the invention that a transverse member is coupled onto the crash box itself by means of joining flanges which are formed on the crash boxes in a fork-shaped manner. The coupling processes may once again take the form here of thermal joining, force-closing and/or form-fitting couplings.

The item-related object on which the invention is based is also achieved by a vehicle subassembly, in particular a bumper arrangement, the vehicle subassembly having two crash boxes produced according to one of Claims 7 to 14 and a transverse link. The vehicle subassembly according to the invention offers the advantage in particular that it has a high crash energy absorption capacity with at the same time low weight. It is particularly preferred to provide a vehicle subassembly, in particular a bumper arrangement, having two crash boxes produced according to one of Claims 9 to 14, which is characterized in that a central web of the crash box and a central axis of the transverse member run substantially parallel and at a distance A from one another.

This should be understood as meaning that the transverse member has a centre axis and the crash box has a central web, the central web forming a plane and the centre axis forming a straight line, the straight line running parallel to the plane and being at a distance from it. In the case of a vehicle crash, a particularly advantageous arrangement is obtained in this way with respect to the crash properties and the energy absorption capacity of the vehicle subassembly.

Preferably, the vehicle subassembly is characterized in that the crash box and the transverse member are coupled to one another by a material bond and/or a form fit. Conceivable here, for example, are a thermal joining process for the material bond and/or a fork-like flange arrangement for a form fit. Furthermore, the crash boxes are connected to the longitudinal members. Here, too, a form fit and/or material bond are once again conceivable within the scope of the invention.

Further advantages, features, properties and aspects of the present invention emerge from the following description, preferred embodiments being given with reference to the schematic drawings, which are intended to make the invention easy to understand and in which:
- Figure 1: shows a crash box according to the invention in a perspective view;
- Figure 2: shows a tool and component arrangement at the beginning of the method;
- Figure 3: shows a tool and component arrangement at the end of the method according to the invention;
- Figure 4: shows a crash box according to the invention in a view from the second wall;
- Figure 5: shows a crash box according to the invention in a view from the third wall;
- Figure 6: shows a crash box according to the invention in a perspective view of the second and third walls;
- Figure 7: shows a detail of a vehicle subassembly according to the invention;
- Figure 8: shows a side view of a vehicle subassembly according to the invention.

In the figures, the same designations are used for the same or similar parts, corresponding or comparable advantages being achieved even if a description thereof is not repeated for reasons of simplification.

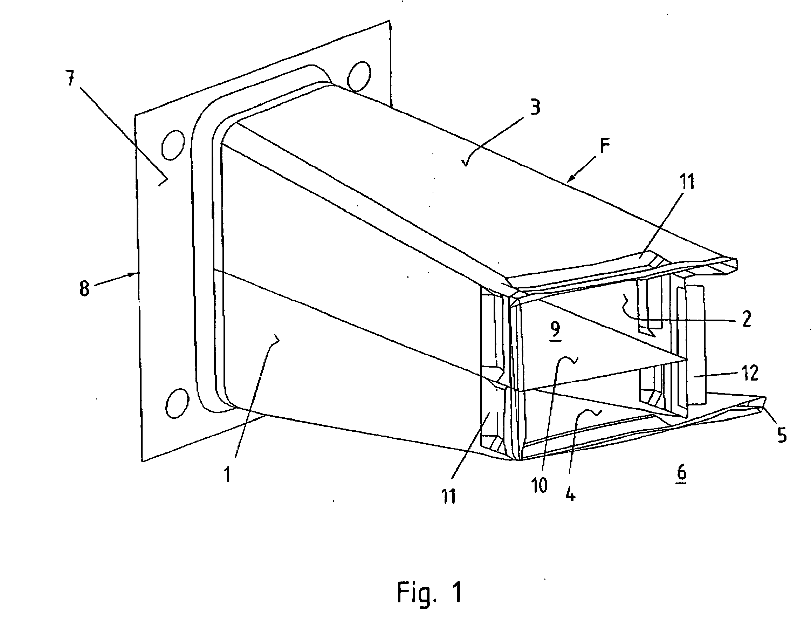

Figure 1 shows a crash box F according to the invention in a perspective view. The crash box F has a first wall 1, a second wall 2, a third wall 3 and a fourth wall 4. Between the second wall 2 and the third wall 3, a double-layered projection 5 is formed from the front side 6 to the rear side 7 of the crash box F. Likewise between the second wall 2 and the fourth wall 4, a double-layered projection 5 is formed so as to run from the front side 6 to the rear side 7.

The crash box F according to the invention is coupled to a joining flange plate 8 by coupling. Furthermore, the crash box F according to the invention has in an interior space 9 a central web 10. The central web 10 in this case extends from the front wall 1 to the second wall 2 as well as running from the front side 6 to the rear side 7. Likewise represented here are clearances 11 and flanges 12 for the connection of further components that are not represented, for example a transverse member 13 not represented any more specifically here.

It can also be seen from Figure 1 that the first and second walls 1 and 2 run substantially parallel to one another and have a narrowing trapezoidal shape Tj, running from the rear side 7 to the front side 6. The third wall 3 and the fourth wall 4 have a trapezoidal shape Ta widening from the rear side 7 to the front side 6, brought about by the double-layered projections 5.

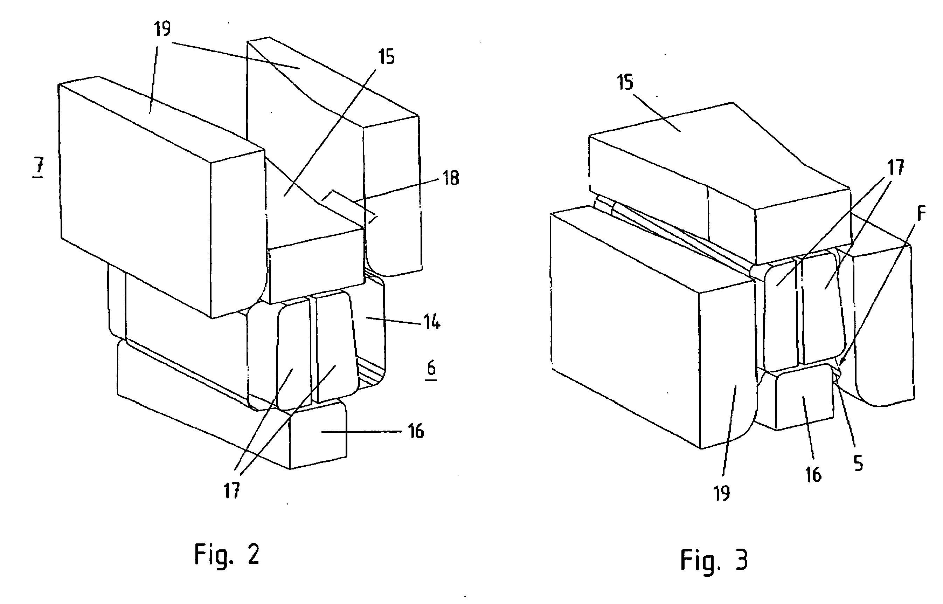

Figure 2 shows a hollow profile 14 before the forming operation performed in the method according to the invention. The hollow profile 14 is in this case fixed between a 1 st tool 15 and a 2nd tool 16 and is supported from the inside by supporting elements 17. The 1 st tool 15 and the supporting elements 17 have a trapezoidal shape Tj, running in this case substantially from the rear side 7 to the front side 6.

In the case of the 1 st tool 15, the trapezoidal shape Tj is created all but for a front segment 18, which runs in a substantially rectangular shape. The supporting elements 17 substantially correspond in their shaping to the 1 st tool 15. The 2nd tool 16 has a narrower trapezoidal shape Tj in comparison with the 1 st tool 15, so that double-layered projections 5 that come to lie against the walls are created in the further forming process between profile tools 19 and the 2nd tool 16.

Figure 3 shows the produced crash box F clamped in the tools after completion of the forming process according to the invention. Here it can be seen that the crash box F is clamped between the 1 st tool 15, the supporting elements 17 and the 2nd tool 16 and, by relative movement of the profile tools 19 in relation to the 1 st tool 15 and the 2nd tool 16, the third wall 3 and the fourth wall 4 of the crash box F come to lie against the supporting elements 17. As a result, the crash box F has a trapezoidal shape Tj of the first wall 1 and second wall 2 that substantially corresponds to the 1 st tool 15 and/or the 2nd tool 16 and a trapezoidal shape Ta of the third wall 3 and fourth wall 4 produced on account of the double-layered projections 5.

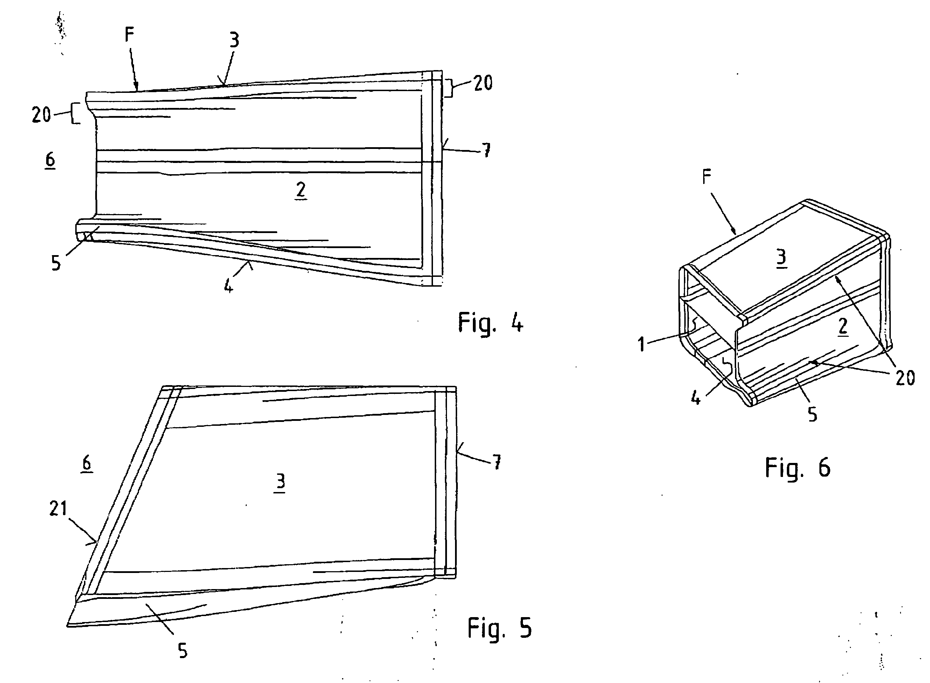

Figure 4 shows a crash box F according to the invention in a view as seen from the second wall 2. It can be seen well that a narrowing trapezoidal shape Tj extends over the crash box F from the rear side 7 to the front side 6. On the third wall 3 and the fourth wall 4, double-layered projections 5 are created in the respective transitional regions 20 with respect to the second wall 2.

In Figure 5, the crash box F is shown in a direction as seen from the third wall 3. Here, too, it can be seen that a widening trapezoidal shape Ta extends over the crash box F from the rear side 7 to the front side 6. The trapezoidal shape Ta is in this case formed by a double-layered projection 5. The slope 21 on the front side 6 is produced here by a separating process.

Figure 6 shows the crash box F in a perspective view as seen from the second wall 2 and the third wall 3. It can be seen well that the double-layered projection 5 is made smaller in its cross-sectional geometry in the transitional region 20 from the third wall 3 to the second wall 2 than the double-layered projection 5 in the transitional region 20 of the second wall 2 to the fourth wall 4.

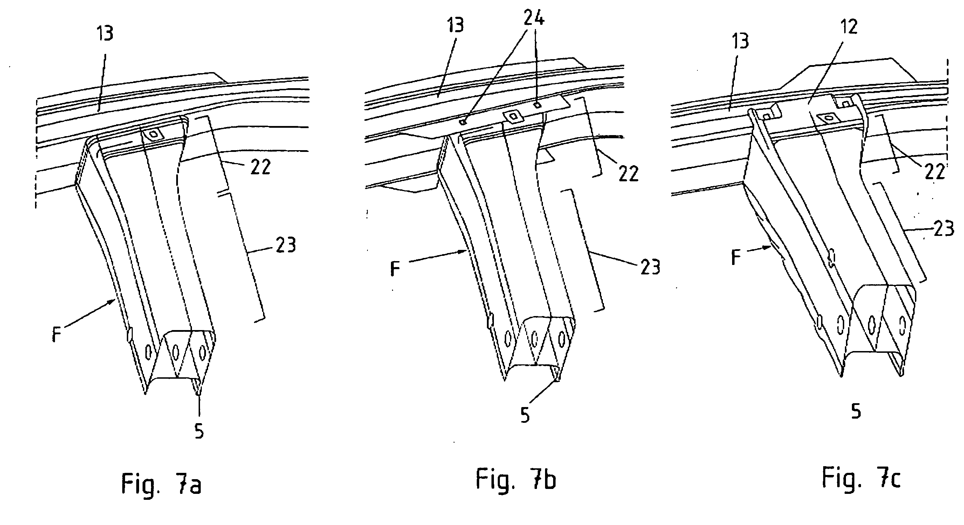

Figures 7a to 7c show various embodiments of a connection of a crash box F according to the invention to a transverse member 13. Figure 7a shows a connection where the crash box F has been attached to the transverse member 13 by means of a material-bonding joining process. The crash box F itself has a substantially trapezoidal segment 22 and a substantially rectangular segment 23.

Figure 7b shows a connection of the crash box F to the transverse member 13 that is produced by a form fit. Here, the transverse member 13 has flanges 12, which overlap the crash box F. The flanges 12 are coupled to the crash box F by means of bolts 24.

Figure 7c shows a connecting region of the crash box F to a transverse member 13, the connecting region having flanges 12, which overlap the transverse member 13. A connection by means of bolts 24 that are not represented or else by means of a thermal joining process is likewise conceivable here.

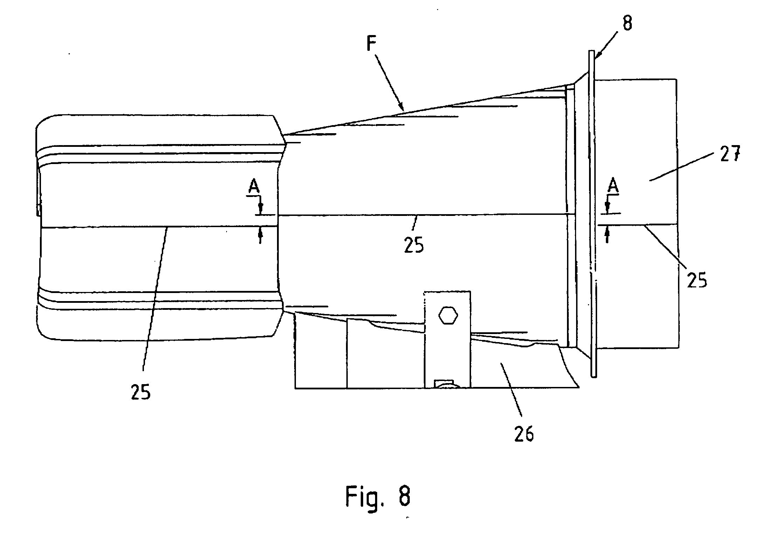

Figure 8 shows an arrangement according to the invention of a transverse member 13 and a crash box F in a side view. The crash box F has a centre axis 25, the central web 10, which is formed here inside the crash box F and cannot be seen, preferably running along the centre axis 25.

Both the centre axis 25 of the crash box F and the centre axis 25 of the transverse member 13 run substantially parallel to one another. The two axes 25 are at a distance A from one another. Also the longitudinal member centre axis can be at a distance A from the centre axis of the crash box. It is also shown here that further add-on components 26 are attached to the crash box F. Likewise, the crash box F is connected by means of the joining flange plate 8 to a longitudinal member 27, represented as a detail, of the motor vehicle not represented any more specifically here.

### List of designations:

- 1 -: first wall
- 2 -: second wall
- 3 -: third wall
- 4 -: fourth wall
- 5 -: double-layered projection
- 6 -: front side
- 7 -: rear side
- 8 -: joining flange plate
- 9 -: interior space
- 10 -: central web
- 11 -: clearance
- 12 -: flange
- 13 -: transverse member
- 14 -: hollow profile
- 15 -: first tool
- 16 -: second tool
- 17 -: supporting element
- 18 -: front segment
- 19 -: profile tool
- 20 -: transitional region
- 21 -: slope
- 22 -: trapezoidal segment
- 23 -: rectangular segment
- 24 -: bolt
- 25 -: centre axis
- 26 -: add-on part
- 27 -: longitudinal member

- F -: crash box
- Tj -: trapezoidal shape, narrowing
- Ta -: trapezoidal shape, widening
- A -: distance

## Claims

1. Method for producing a crash box (F), from a profile component, with the profile component having a first wall (1), a second wall (2), a third wall (3), a fourth wall (4), a front side (6) and a rear side (7), with the following method steps:
- fixing the profile component in a forming device, which has a 1 st tool (15) and a 2nd tool (16), the 1st tool (15) and the 2nd tool (16) having at least one trapezoidal length segment in the longitudinal direction of the tool, the 1st tool (15) coming to lie substantially flat against the outside of the first wall (1) and the 2nd tool (16) coming to lie substantially flat against the outside of the second wall (2), so that regions of the first wall (1) protrude laterally with respect to the 1st tool (15) and regions of the second wall (2) protrude laterally with respect to the 2nd tool (16),
- introducing supporting elements (17) into an interior space (9) of the profile component, the supporting elements (17) being designed such that they correspond to the trapezoidal shape (T) of the 1 st tool, the supporting elements (17) substantially filling the interior space (9) and coming to lie substantially from the inside against the first wall (1) and from the inside against the second wall (2),
- forming of the laterally protruding regions by profile tools (19), the profile tools (19) being moved in relation to the 1 st tool (15), the 2nd tool (16) and the supporting elements (17), the third wall (3) and the fourth wall (4) being formed in the direction of the supporting elements (17) to create double-layered projections (5) projecting with respect to the second wall (2).

2. Method according to Claim 1, **characterized in that** the double-layered projections (5) are formed from the regions of the second wall (2) and the segments of the third wall (3) and the fourth wall (4) adjacent thereto.

3. Method according to Claim 1 or 2, **characterized in that** a double-chamber hollow profile is used as the profile component and a supporting element (17) is introduced into each chamber.

4. Method according to one of Claims 1 to 3, **characterized in that** the double-layered projections (5) are of a triangular design, running from the rear side (7) to the front side (6) orthogonally in relation to the second wall (2).

5. Method according to one of Claims 1 to 4, **characterized in that**, after the forming operation, the front side (6) and/or the rear side (7) is subjected to a separating process.

6. Method according to one of Claims 1 to 5, **characterized in that** the third wall (3) and the fourth wall (4) are formed such that they run towards one another at an angle from the rear side (7) to the front side (6).

7. Crash Box (F), produced from a hollow profile (14) and having a first wall (1), a second wall (2), a third wall (3), a fourth wall (4), a rear side (7) and a front side (6), with the first wall (1), the second wall (2), the third wall (3) and the fourth wall (4) having at least one trapezoidal length segment, **characterized in that** a double-layered projection (5) is respectively created in a transitional region from the second wall (2) to the third wall (3) and in a transitional region from the second wall (2) to the fourth wall (4), the double-layered projection (5) running in a substantially triangular shape from the rear side (7) to the front side (6).

8. Crash box according to Claim 7, **characterized in that** the hollow profile (14) is a lightweight extruded metal profile.

9. Crash box according to Claim 7 or 8, **characterized in that** a central web (10) connecting the first wall (1) and the second wall (2) to one another is formed in the longitudinal direction of the component.

10. Crash box according to one of Claims 7 to 9, **characterized in that** the trapezoidal length segment of the first wall (1) and the second wall (2) is designed such that it becomes narrower from the rear side (7) to the front side (6) and **in that** the trapezoidal length segment of the third wall (3) and the fourth wall (4) is designed such that it becomes wider from the rear side (7) to the front side (6).

11. Crash Box according to one of Claims 7 to 10, **characterized in that** the trapezoidally designed length segment is adjoined by a rectangular length segment.

12. Crash box according to one of Claims 7 to 11, **characterized in that** the double-layered projections (5) are formed over the entire length of the crash box (F) in the direction of the component.

13. Crash box according to one of Claims 7 to 12, **characterized in that** the double-layered projections (5) have a cross-sectional configuration differing from one to the other.

14. Crash box according to one of Claims 7 to 13, **characterized in that** the walls have clearances (11) and/or flanges (12).

15. Vehicle subassembly, in particular a bumper arrangement, the vehicle subassembly having two crash boxes (F) produced according to one of Claims 7 to 14 and a transverse link.

16. Vehicle subassembly, in particular a bumper arrangement, the vehicle subassembly having two crash boxes (F) produced according to one of Claims 9 to 14, **characterized in that** a central web (10) of the crash box (F) and a central axis (25) of the transverse member (13) run substantially parallel and at a distance (A) from one another.

17. Vehicle subassembly according to Claim 15 or 16, **characterized in that** the crash box (F) and the transverse member (13) are coupled to one another by a material bond and/or a form fit.

## Patentansprüche

1. Verfahren zur Herstellung einer Crashbox (F) aus einem Profilbauteil, wobei das Profilbauteil eine erste Wand (1), eine zweite Wand (2), eine dritte Wand (3), eine vierte Wand (4), eine Vorderseite (6) und eine Rückseite (7) aufweist, mit den folgenden Verfahrensschritten:
- Befestigen des Profilbauteils in einer Formvorrichtung, welche ein erstes Werkzeug (15) und ein zweites Werkzeug (16) aufweist, wobei das erste Werkzeug (15) und das zweite Werkzeug (16) mindestens einen trapezförmigen Längenabschnitt in der Längsrichtung des Werkzeugs aufweisen, wobei das erste Werkzeug (15) im Wesentlichen flach an der Außenseite der ersten Wand (1) zur Anlage kommt und das zweite Werkzeug (16) im Wesentlichen flach an der Außenseite der zweiten Wand (2) zur Anlage kommt, so dass Bereiche der ersten Wand (1) bezüglich des ersten Werkzeugs (15) seitlich vorstehen und Bereiche der zweiten Wand (2) bezüglich des zweiten Werkzeugs (16) seitlich vorstehen,
- Einführen von Stützelementen (17) in einen inneren Raum (9) des Profilbauteils, wobei die Stützelemente (17) derart ausgebildet sind, dass sie der trapezförmigen Gestalt (T) des ersten Werkzeugs entsprechen, wobei die Stützelemente (17) den inneren Raum (9) im Wesentlichen ausfüllen und im Wesentlichen von innen an der ersten Wand (1) und von innen an der zweiten Wand (2) zur Anlage kommen,
- Formen der seitlich vorstehenden Bereiche durch Profilwerkzeuge (19), wobei die Profilwerkzeuge (19) in Bezug auf das erste Werkzeug (15), das zweite Werkzeug (16) und die Stützelemente (17) bewegt werden, wobei die dritte Wand (3) und die vierte Wand (4) in der Richtung der Stützelemente (17) verformt werden, um doppelschichtige Vorsprünge (5) zu erzeugen, die bezüglich der zweiten Wand (2) vorstehen.

2. Verfahren nach Anspruch 1, **dadurch gekennzeichnet, dass** die doppelschichtigen Vorsprünge (5) aus den Bereichen der zweiten Wand (2) und den Abschnitten der dritten Wand (3) und der vierten Wand (4), die ihnen benachbart sind, geformt werden.

3. Verfahren nach Anspruch 1 oder 2, **dadurch gekennzeichnet, dass** ein Doppelkammer-Hohlprofil als das Profilbauteil verwendet wird und ein Stützelement (17) in jede Kammer eingeführt wird.

4. Verfahren nach einem der Ansprüche 1 bis 3, **dadurch gekennzeichnet, dass** die doppelschichtigen Vorsprünge (5) dreieckförmig ausgebildet sind, wobei sie von der Rückseite (7) zur Vorderseite (6) orthogonal bezüglich der zweiten Wand (2) verlaufen.

5. Verfahren nach einem der Ansprüche 1 bis 4, **dadurch gekennzeichnet, dass** nach dem Umformvorgang die Vorderseite (6) und/oder die Rückseite (7) einem Trennvorgang unterzogen werden.

6. Verfahren nach einem der Ansprüche 1 bis 5, **dadurch gekennzeichnet, dass** die dritte Wand (3) und die vierte Wand (4) so ausgebildet sind, dass sie unter einem Winkel von der Rückseite (7) zur Vorderseite (6) aufeinander zu verlaufen.

7. Crashbox (F), die aus einem Hohlprofil (14) hergestellt ist und eine erste Wand (1), eine zweite Wand (2), eine dritte Wand (3), eine vierte Wand (4), eine Rückseite (7) und eine Vorderseite (6) aufweist, wobei die erste Wand (1), die zweite Wand (2), die dritte Wand (3) und die vierte Wand (4) mindestens einen trapezförmigen Längenabschnitt aufweisen, **dadurch gekennzeichnet, dass** jeweils ein doppelschichtiger Vorsprung (5) in einem Übergangsbereich von der zweiten Wand (2) zur dritten Wand (3) und in einem Übergangsbereich von der zweiten Wand (2) zur vierten Wand (4) erzeugt wird, wobei der doppelschichtige Vorsprung (5) in einer im Wesentlichen dreieckförmigen Gestalt von der Rückseite (7) zur Vorderseite (6) verläuft.

8. Crashbox nach Anspruch 7, **dadurch gekennzeichnet, dass** das Hohlprofil (14) ein leichtes extrudiertes Metallprofil ist.

9. Crashbox nach Anspruch 7 oder 8, **dadurch gekennzeichnet, dass** ein Mittelsteg (10), der die erste Wand (1) und die zweite Wand (2) miteinander verbindet, in der Längsrichtung des Bauteils ausgebildet ist.

10. Crashbox nach einem der Ansprüche 7 bis 9, **dadurch gekennzeichnet, dass** der trapezförmige Längenabschnitt der ersten Wand (1) und der zweiten Wand (2) derart ausgebildet ist, dass er von der Rückseite (7) zur Vorderseite (6) schmaler wird, und dadurch, dass der trapezförmige Längenabschnitt der dritten Wand (3) und der vierten Wand (4) derart ausgebildet ist, dass er von der Rückseite (7) zur Vorderseite (6) breiter wird.

11. Crashbox nach einem der Ansprüche 7 bis 10, **dadurch gekennzeichnet, dass** sich an den trapezförmig gestalteten Längenabschnitt ein rechteckiger Längenabschnitt anschließt.

12. Crashbox nach einem der Ansprüche 7 bis 11, **dadurch gekennzeichnet, dass** die doppelschichtigen Vorsprünge (5) über die gesamte Länge der Crashbox (F) in der Richtung des Bauteils ausgebildet sind.

13. Crashbox nach einem der Ansprüche 7 bis 12, **dadurch gekennzeichnet, dass** die doppelschichtigen Vorsprünge (5) Querschnittskonfigurationen aufweisen, die sich voneinander unterscheiden.

14. Crashbox nach einem der Ansprüche 7 bis 13, **dadurch gekennzeichnet, dass** die Wände Aussparungen (11) und/oder Flansche (12) aufweisen.

15. Fahrzeugbaugruppe, insbesondere Stoßfängeranordnung, wobei die Fahrzeugbaugruppe zwei Crashboxen (F), die nach einem der Ansprüche 7 bis 14 hergestellt sind, und ein Querverbindungselement aufweist.

16. Fahrzeugbaugruppe, insbesondere Stoßfängeranordnung, wobei die Fahrzeugbaugruppe zwei Crashboxen (F) aufweist, die nach einem der Ansprüche 9 bis 14 hergestellt sind, **dadurch gekennzeichnet, dass** ein Mittelsteg (10) der Crashbox (F) und eine Mittelachse (25) des Querelements (13) im Wesentlichen parallel und in einem Abstand (A) voneinander verlaufen.

17. Fahrzeugbaugruppe nach Anspruch 15 oder 16, **dadurch gekennzeichnet, dass** die Crashbox (F) und das Querelement (13) durch eine stoffschlüssige Verbindung und/oder eine formschlüssige Verbindung miteinander verbunden sind.

## Revendications

1. Procédé de production d'une crash box (F) à partir d'un composant de profilé qui présente une première paroi (1), une deuxième paroi (2), une troisième paroi (3), une quatrième paroi (4), un côté avant (6) et un côté arrière (7), comprenant les étapes suivantes :
- fixer le composant de profilé dans un dispositif de formage qui présente un premier outil (15) et un second outil (16), le premier outil (15) et le second outil (16) présentant au moins un segment de longueur trapézoïdal dans la direction longitudinale de l'outil, le premier outil (15) venant reposer sensiblement à plat contre le côté extérieur de la première paroi (1) et le second outil (16) venant reposer sensiblement à plat contre le côté extérieur de la seconde paroi (2) de sorte que des régions de la première paroi (1) fassent saillie latéralement par rapport au premier outil (15) et des régions de la seconde paroi (2) fassent saillie latéralement par rapport au second outil (16),
- introduire des éléments porteurs (17) dans un espace intérieur (9) du composant de profilé, les éléments porteurs (17) étant conçus de sorte à correspondre à la forme trapézoïdale (T) du premier outil, les éléments porteurs (17) remplissant sensiblement l'espace intérieur (9) et venant reposer sensiblement depuis l'intérieur contre la première paroi (1) et depuis l'intérieur contre la seconde paroi (2),
- former les régions en saillie latéralement par des outils de profilé (19), les outils de profilé (19) étant déplacés par rapport au premier outil (15), au second outil (16) et aux éléments porteurs (17), la troisième paroi (3) et la quatrième paroi (4) étant formées dans la direction des éléments porteurs (17) pour créer des saillies à double couche (5) faisant saillie par rapport à la seconde paroi (2).

2. Procédé selon la revendication 1, **caractérisé en ce que** les saillies à double paroi (5) sont formées dans les régions de la seconde paroi (2) et les segments de la troisième paroi (3) et de la quatrième paroi (4) adjacente à celle-ci.

3. Procédé selon la revendication 1 ou 2, **caractérisé en ce qu'**un profilé creux à double chambre est utilisé comme composant de profilé et un élément porteur (17) est introduit dans chaque chambre.

4. Procédé selon l'une quelconque des revendications 1 à 3, **caractérisé en ce que** les saillies à double couche (5) sont d'une conception triangulaire, à partir du côté arrière (7) au côté avant (6) orthogonalement par rapport à la seconde paroi (2).

5. Procédé selon l'une quelconque des revendications 1 à 4, **caractérisé en ce qu'**après l'opération de formage, le côté avant (6) et/ou le côté arrière (7) est soumis à un processus de séparation.

6. Procédé selon l'une quelconque des revendications 1 à 5, **caractérisé en ce que** la troisième paroi (3) et la quatrième paroi (4) sont formées de sorte à s'étendre l'une vers l'autre au niveau d'un angle depuis le côté arrière (7) au côté avant (6).

7. Crash box (F) produite à partir d'un composant de profilé (14) et présentant une première paroi (1), une deuxième paroi (2), une troisième paroi (3), une quatrième paroi (4), un côté arrière (7) et un côté avant (6), la première paroi (1), la deuxième paroi (2), la troisième paroi (3) et la quatrième paroi (4) présentant au moins un segment de longueur trapézoïdal, **caractérisé en ce qu'**une saillie à double couche (5) est respectivement créée dans une région de transition allant de la seconde paroi (2) à la troisième paroi (3) et dans une région de transition allant de la deuxième paroi (2) à la quatrième paroi (4), la saillie à double couche (5) s'étendant dans une forme sensiblement triangulaire depuis le côté arrière (7) au côté avant (6).

8. Crash box selon la revendication 7, **caractérisée en ce que** le profilé creux (14) est un profilé en métal extrudé léger.

9. Crash box selon la revendication 7 ou 8, **caractérisée en ce qu'**une âme centrale (10) reliant la première paroi (1) à la seconde paroi (2) est formée dans la direction longitudinale du composant.

10. Crash box selon l'une quelconque des revendications 7 à 9, **caractérisée en ce que** le segment de longueur trapézoïdal de la première paroi (1) et de la deuxième paroi (2) est conçu de sorte à se rétrécir depuis le côté arrière (7) au côté avant (6) et **en ce que** le segment de longueur trapézoïdal de la troisième paroi (3) et de la quatrième paroi (4) est conçu de sorte à s'élargir depuis le côté arrière (7) au côté avant (6).

11. Crash box selon l'une quelconque des revendications 7 à 10, **caractérisée en ce que** le segment de longueur conçu de manière trapézoïdale est avoisiné par un segment de longueur rectangulaire.

12. Crash box selon l'une quelconque des revendications 7 à 11, **caractérisée en ce que** les saillies à double couche (5) sont formées sur la longueur entière de la crash box (F) dans la direction du composant.

13. Crash box selon l'une quelconque des revendications 7 à 12, **caractérisée en ce que** les saillies à double couche (5) présentent une configuration de section transversale différant l'une de l'autre.

14. Crash box selon l'une quelconque des revendications 7 à 13, **caractérisée en ce que** les parois présentent des espacements (11) et/ou des brides (12).

15. Sous-ensemble de véhicule, en particulier ensemble de pare-chocs, le sous-ensemble de véhicule présentant deux crash box (F) produites selon l'une quelconque des revendications 7 à 14 et un bras oscillant transversal.

16. Sous-ensemble de véhicule, en particulier ensemble de pare-chocs, le sous-ensemble de véhicule présentant deux crash box (F) produites selon l'une quelconque des revendications 9 à 14, **caractérisé en ce qu'**une âme centrale (10) de la crash box (F) et un axe central (25) de l'élément transversal (13) s'étendent sensiblement parallèlement et à une distance (A) l'un de l'autre.

17. Sous-ensemble de véhicule selon la revendication 15 ou 16, **caractérisé en ce que** la crash box (F) et l'élément transversal (13) sont couplés l'un à l'autre par liaison de matière et/ou par complémentarité de formes.
